# EUROPÄISCHE PATENTSCHRIFT

(11) **EP 4 041 483 B1**
(45) Veröffentlichungstag und Bekanntmachung des Hinweises auf die Patenterteilung: **11.01.2023**
(21) Anmeldenummer: 20786526.2
(22) Anmeldetag: 05.10.2020
(51) Int. Cl.: B23F 23/12, B23F 1/02, B23F 5/02

(54) **VERFAHREN ZUM SCHLEIFEN DER VERZAHNUNG EINES ZAHNRADS**
METHOD FOR GRINDING THE TOOTHING OF A GEAR
PROCÉDÉ DE RECTIFICATION DE LA DENTURE D'UN ENGRENAGE

(30) Priorität: 12.10.2019 DE 102019127520
(43) Veröffentlichungstag der Anmeldung: 17.08.2022
(73) Patentinhaber: Kapp Niles GmbH & Co. KG, 96450 Coburg (DE)
(72) Erfinder: GRINKO, Sergiy, 96450 Coburg (DE)
(74) Vertreter: Gosdin, Carstensen & Partner Patentanwälte Partnerschaftgesellschaft mbB
(86) Internationale Anmeldenummer: PCT/EP2020/077873
(87) Internationale Veröffentlichungsnummer: WO 2021/069384

(56) Entgegenhaltungen:
- EP-A1- 0 890 144
- EP-A1- 2 583 779
- EP-A1- 3 407 011
- EP-A1- 3 456 453
- WO-A1-2006/053447
- DE-A1-102010 055 820
- US-B1- 6 577 917

## Beschreibung

Die Erfindung betrifft ein Verfahren gemäss dem Oberbegriff des Anspruchs 1 zum Schleifen der Verzahnung eines Zahnrads, wobei das Zahnrad eine Drehachse aufweist, wobei das Schleifen erfolgt, indem ein Schleifwerkzeug mit der Verzahnung in Eingriff gebracht und ein Aufmaß auf den Zahnflanken der Verzahnung abgeschliffen wird, wobei für die Verzahnung ein Soll-Wert für die Zahnweite und/oder für das Kugelmaß vorgegebenen ist, wobei für den Soll-Wert ein Toleranzband vorgegeben ist, dessen Einhaltung noch zu Gut-Teilen (d. h. zu solchen Teilen, bei denen alle Zahnlücken einwandfrei geschliffen wurden und die vorgegebene Toleranz für die Zahnweite bzw. das Kugelmaß eingehalten ist) führt und wobei das Verfahren die Schritte aufweist:
a) Vermessen der Lage der Oberfläche der Zahnflanken des noch nicht geschliffenen Zahnrads an mindestens zwei in Richtung der Drehachse versetzt angeordneten axialen Positionen des Zahnrads;
b) Ermittlung des tatsächlich vorhandenen Aufmaßes des noch nicht geschliffenen Zahnrads auf der Basis der in Schritt a) ermittelten Messwerte; und
c) Schleifen der Verzahnung durch radiale Zustellung des Schleifwerkzeugs relativ zur Verzahnung.

Ein derartiges Verfahren ist aus dem Dokument DE 10 2010 055 820 A1 bekannt.

Beim Schleifen einer Verzahnung eines Zahnrads wird das Schleifwerkzeug, beispielsweise also eine Schleifscheibe, in Eingriff mit der zu schleifenden Verzahnung gebracht, wobei das vor dem Schleifen vorliegende Aufmaß auf den Zahnflanken abgeschliffen wird. Hierzu muss das Schleifwerkzeug zunächst in die Zahnlücke eingemittet werden.

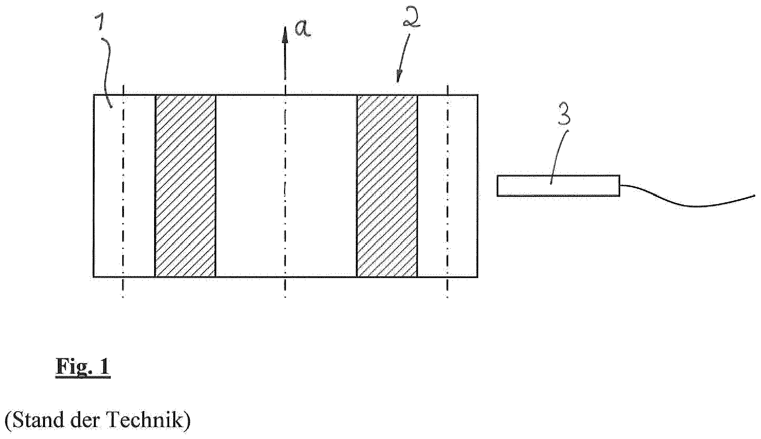

Dieser bekannte Vorgang ist in Figur 1 illustriert. Das Zahnrad 2 mit der zu schleifenden Verzahnung 1 rotiert um die Drehachse a des Zahnrads 2, während ein Sensor 3, beispielsweise ein induktiver Sensor, Messdaten erfasst, aus denen auf die Position der Zahnlücke geschlossen werden kann. Der Sensor 3 wird hier zumeist axial zentrisch positioniert. Während der Drehung des Zahnrads 2 nimmt der Sensor 3 die Signale von den beiden Zahnflanken auf. In der Maschinensteuerung kann dann aus diesen Signalen berechnet werden, wo die Mitte der Zahnlücke liegt. Das Schleifwerkzeug wird dann entsprechend in der Mitte der Zahnlücke positioniert.

Anschließend erfolgt dann der eigentliche Schleifvorgang. Dabei wird das Schleifwerkzeug relativ zum Werkstück (Zahnrad) radial so zugestellt, dass die Verzahnung nach dem Schleifen die gewünschte Zahnweite bzw. das gewünschte Kugelmaß (bzw. Rollenmaß, welches äquivalent zum Kugelmaß ist und statt Meßkugeln Meßrollen einsetzt) aufweist. Somit ergibt sich die Zustellung des Schleifwerkzeugs zum Werkstück aufgrund der entsprechenden Vorgabe des Soll-Werts für die Zahnweite bzw. für das Kugelmaß (bzw. Rollenmaß). Hierbei wird die Zustellung des Werkzeugs zum Werkstück gemäß dem Soll-Wert vorgenommen, um bei fertigungsbedingten Abweichungen das Toleranzband nutzen und möglichst viele Gut-Teile fertigen zu können. Dieser Abstand zwischen Werkstück und Werkzeug wird üblicherweise während des gesamten zu bearbeitenden Loses an Zahnrädern nicht geändert.

Bei der Zahnweite handelt es sich um den Abstand, den zwei ebene und tangential an die Zahnflanken angelegte Messflächen haben, wobei bei der Messung eine definierte Anzahl an Zähnen zwischen den Messflächen liegt. Mit der Zahnweite kann die Zahndicke der Zähne bestimmt werden. Sie eignet sich als einfaches Qualitätsprüfungsverfahren für das geschliffene Zahnrad.

Das Kugelmaß (bzw. Rollenmaß) ist gleichermaßen eine Bestimmungsgröße für die Zahndicke der Verzahnung, wobei Kugeln (oder Rollen) in diametral gegenüberliegende Zahnlücken der Verzahnung eingefahren werden und der Abstand der Kugeln (oder Rollen) bestimmt wird. Demgemäß ist auch dieses Maß eine Bestimmungsgröße für die Zahndicke und eignet sich als Qualitätsprüfungsverfahren für das geschliffene Zahnrad.

Für die Zahnweite bzw. für das Kugelmaß (bzw. Rollenmaß) wird dabei in der Regel ein Soll-Wert vorgegeben, für den ein definiertes Toleranzband gilt. Demgemäß darf die Zahnweite bzw. das Kugelmaß vom Sollwert um einen vorgegebenen Wert abweichen, so dass das Zahnrad noch als Gut-Teil zu qualifizieren ist.

Aufgrund der bislang üblichen Vorgehensweise bei der Fertigung ist es, abhängig von der Qualität der Vorbearbeitung des Zahnrads, unvermeidlich, dass ein gewisses Maß an Ausschuss anfällt, da bei ungünstiger Konstellation nicht alle Zahnflanken geschliffen werden. Es kann insbesondere sein, dass bei der gegebenen Maschineneinstellung (relative Zustellung des Werkzeugs zum Werkstück) manche Zahnflanken nicht "sauber" werden und somit zu Ausschuss führen.

Der Erfindung liegt die **Aufgabe** zugrunde, ein gattungsgemäßes Verfahren so weiterzubilden, dass es möglich wird, einen höheren Anteil an Gut-Teilen mit möglichst hoher Qualität zu erzielen.

Die **Lösung** dieser Aufgabe durch die Erfindung sieht vor, dass das Verfahren die zusätzlichen Schritte aufweist:
c1) die radiale Zustellung des Schleifwerkzeugs relativ zur Verzahnung entspricht dem Soll-Wert der Zahnweite und/oder des Kugelmaßes, wenn die Ermittlung nach Schritt b) ergeben hat, dass an allen Zahnflanken ein solches Aufmaß vorliegt, dass es zum Spanabtrag an allen Zahnflanken kommt, oder
c2) die radiale Zustellung des Schleifwerkzeugs relativ zur Verzahnung erfolgt auf einen höheren Wert, als es dem Soll-Wert der Zahnweite und/oder des Kugelmaßes entspricht, wobei der höhere Wert noch dem Toleranzband für die Zahnweite und/oder das Kugelmaß entspricht, wenn die Ermittlung nach Schritt b) ergeben hat, dass nur bei erhöhter radialer Zustellung an allen Zahnflanken ein solches Aufmaß vorliegt, dass es zum Spanabtrag an allen Zahnflanken kommt.

Demgemäß wird erfindungsgemäß gezielt die generell angestrebte Mitte des Toleranzbands für die Zahnweite bzw. das Kugelmaß bei der radialen Zustellung des Werkzeugs relativ zum Werkstück in Richtung Toleranzbandende verlassen, das gegebene Toleranzband jedoch eingehalten, wenn die Ermittlung des tatsächlichen Aufmaßes ergeben hat, dass durch die genannte Veränderung der radialen Zustellung noch ein Gut-Teil geschliffen werden kann.

Ergänzend kann vorgesehen werden, dass ein Schleifen gemäß obigem Schritt c) nicht durchgeführt wird, wenn die Ermittlung nach obigem Schritt b) ergeben hat, dass auch bei einer erhöhten radialen Zustellung bis an Grenze des Toleranzbandes nur noch ein solches Aufmaß vorliegt, dass es beim Schleifen an mindestens einer Zahnflanke zu keinem Spanabtrag kommen würde. Dann ist die Fertigung eines Gut-Teils nämlich nicht mehr möglich.

Die Vermessung der Lage der Oberfläche der Zahnflanken gemäß obigem Schritt a) kann dabei mit mindestens zwei Sensoren erfolgen, die in Richtung der Drehachse versetzt, aber an derselben Umfangsposition des Zahnrades angeordnet sind.

Alternativ kann auch vorgesehen werden, dass die Vermessung der Lage der Oberfläche der Zahnflanken gemäß obigem Schritt a) mit mindestens zwei Sensoren erfolgt, die in Richtung der Drehachse versetzt und an unterschiedlichen Umfangspositionen des Zahnrades angeordnet sind. Dies kann sich aus Gründen des zur Verfügung stehenden Bauraums als sehr vorteilhaft erweisen.

Eine weitere alternative Möglichkeit sieht vor, dass die Vermessung der Lage der Oberfläche der Zahnflanken gemäß obigem Schritt a) mit einem einzigen Sensor erfolgt, der in Richtung der Drehachse beweglich angeordnet ist.

Als Sensor kann ein optisch wirkender Sensor verwendet werden, wobei hierbei insbesondere ein Laser eingesetzt werden kann. Gleichermaßen tauglich sind induktiv oder kapazitiv wirkende Sensoren. Auch Sensoren, die Wirbelströme nutzen, sind generell geeignet.

Als Schleifwerkzeug wird vorzugsweise eine Schleifschnecke verwendet. Gleichermaßen ist aber auch der Einsatz einer Schleifscheibe möglich.

Bei dem zu bearbeitenden Zahnrad handelt es sich bevorzugt um ein solches mit einer Außenverzahnung, wenngleich natürlich auch Innenverzahnungen möglich sind.

Die vorliegende Erfindung stellt also darauf ab, dass das tatsächlich vorliegende Aufmaß der zu schleifenden Verzahnung bei einem Zahnrad ermittelt wird und adaptiv eine Einstellung der radialen Zustellung des Schleifwerkzeugs relativ zur Verzahnung so gewählt wird, dass das Zahnrad als Gut-Teil geschliffen werden kann, d. h. dass sämtliche Zahnflanken spannend bearbeitet werden. Hierzu wird der gegebene Toleranzbereich für die Zahnweite bzw. für das Kugelmaß (oder Rollenmaß) genutzt.

Somit ergibt sich eine effektive Möglichkeit, den Anteil an Gut-Teilen beim Schleifen von Zahnrädern zu erhöhen und insbesondere auch solche Werkstücke noch als Gut-Teil schleifen zu können, die bislang zu Ausschuss wurden.

In der Zeichnung sind Ausführungsbeispiele der Erfindung dargestellt. Es zeigen:
- Fig. 1: schematisch die Darstellung des Einmittens eines Schleifwerkzeugs in die Zahnlücke eines Zahnrads gemäß dem Stand der Technik,
- Fig. 2: schematisch die Darstellung beim Schleifen eines Zahnrads mit zu großem Rohteilfehler,
- Fig. 3: schematisch die Darstellung beim Schleifen eines Zahnrads mit hinreichendem Aufmaß,
- Fig. 4: schematisch die Darstellung beim Schleifen eines Zahnrads mit zu großem Rohteilfehler,
- Fig. 5: schematisch die Darstellung des Vermessen des Aufmaßes eines Zahnrads gemäß einer ersten Ausführungsform der Erfindung,
- Fig. 6: schematisch die Darstellung des Vermessen des Aufmaßes eines Zahnrads gemäß einer zweiten Ausführungsform der Erfindung,
- Fig. 7: schematisch die Darstellung des Vermessen des Aufmaßes eines Zahnrads gemäß einer dritten Ausführungsform der Erfindung und
- Fig. 8: schematisch die Darstellung beim Schleifen eines Zahnrads gemäß dem erfindungsgemäßen Konzept.

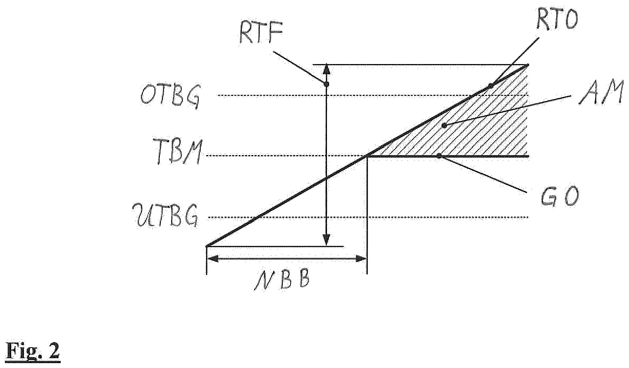

In Fig. 2 ist zunächst die der Erfindung zu Grunde liegende Problematik schematisch dargestellt. Schematisch angedeutet ist, dass sich für die Verzahnung eines Zahnrads ein gewisser Rohteilfehler RTF ergibt, der aus der Vorbearbeitung resultiert.

Nach dem Härten sind die Verzahnungen häufig verzogen und weisen somit unsystematische Fehler im Verzahnungsprofil, in der Verzahnungslinie und im Verzahnungsmaß auf. Ferner kann bezüglich der Spannbohrung ein Taumel vorliegen. Somit hat das zu bearbeitende Zahnrad besagten Rohteilfehler RTF.

Dieser insgesamt vorliegende Fehler kann quantitativ größer sein als das zur Verfügung stehende Toleranzband für die Zahnweite bzw. für das Kugelmaß, wie es Figur 2 zeigt. Die vorgegebene Zahnweite bzw. das vorgegebene Kugelmaß ist schematisch durch die Toleranzbandmitte TBM angedeutet, d. h. die radiale Zustellung des Schleifwerkzeugs zur Verzahnung ist so gewählt, dass sich die Toleranzbandmitte TBM ergibt. Allerdings ist für ein Gut-Teil ein Toleranzband vorgegeben, in welchem die Zahnweite bzw. das Kugelmaß liegen muss; hierfür ist schematisch in Figur 2 die obere Toleranzbandgrenze OTBG sowie die untere Toleranzbandgrenze UTBG eingezeichnet.

Der Toleranzband für die Zahnweite liegt zumeist im Bereich von 10 % bis 30 % des Aufmaßes.

Das Rohteil weist zunächst auf seinen Zahnflanken die Rohteiloberfläche RTO auf, von der Material abgeschliffen wird, d. h. abzuschleifendes Material AM. Dies führt zu einer geschliffenen Oberfläche GO.

Wie sich aus Figur 2 ergibt, ist es auf diese Art und Weise nicht möglich, ein Gut-Teil zu schleifen, da das Niveau der Rohteiloberfläche RTO teils unter der geschliffenen Oberfläche GO liegt (siehe linken Abschnitt in Figur 2: nicht bearbeiteter Bereich NBB); das vorhandene Aufmaß reicht also nicht aus, um ein Gut-Teil zu schleifen. Das Zahnrad, für das die in Figur 2 dargestellten Verhältnisse aufweist, wird damit zwangsläufig Ausschuss. Der Rohteilfehler RTF ist größer als das Toleranzband für Zahnweite bzw. Kugelmaß.

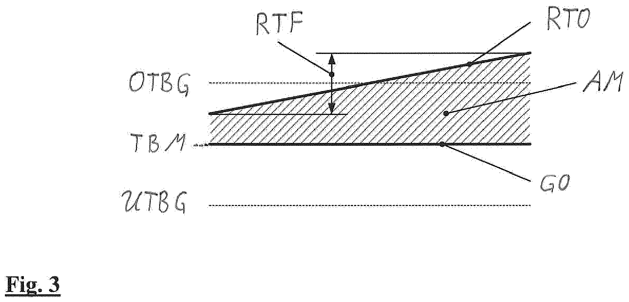

In Figur 3 sind die Verhältnisse skizziert, die sich ergeben, wenn hinreichend Aufmaß an den Zahnflanken vorliegt und die Verzahnung problemlos ordnungsgemäß geschliffen werden kann. Zu erkennen ist, dass der Rohteilfehler RTF in einem Bereich liegt, der bezüglich der Toleranz für Zahnweite bzw. Kugelmaß oberhalb der Toleranzbandmitte TBM angeordnet ist. Somit liegt an allen Zahnflanken abzuschleifendes Material AM vor, so dass ein Gut-Teil geschliffen werden kann, auch ohne Einsatz des erfindungsgemäßen Verfahrens, d. h. in klassischer Weise bei Einstellung der Relativposition zwischen Werkstück und Werkzeug auf Toleranzbandmitte.

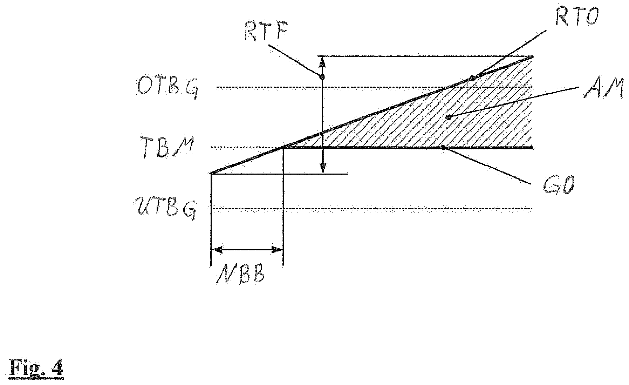

In Figur 4 sind nun die Verhältnisse skizziert, die beim Schleifen nach dem Stand der Technik zu einem Ausschussteil führen würden, was allerdings bei Einsatz des erfindungsgemäßen Verfahrens vermieden werden kann:
Zu sehen ist zunächst, dass die gegebene Rohteiloberfläche RTO zu einem Rohteilfehler RTF führt, der dann problematisch ist, wenn in klassischer Weise die radiale Zustellung zwischen Schleifwerkzeug und Verzahnung auf dem Niveau der Toleranzbandmitte TBM für Zahnweite bzw. Kugelmaß liegt. In diesem Falle (siehe Figur 4: nicht bearbeiteter Bereich NBB) wird es Zahnflanken geben, die nicht mehr sauber geschliffen werden können, da die Rohteiloberfläche RTO die Toleranzbandmitte TBM unterschreitet.

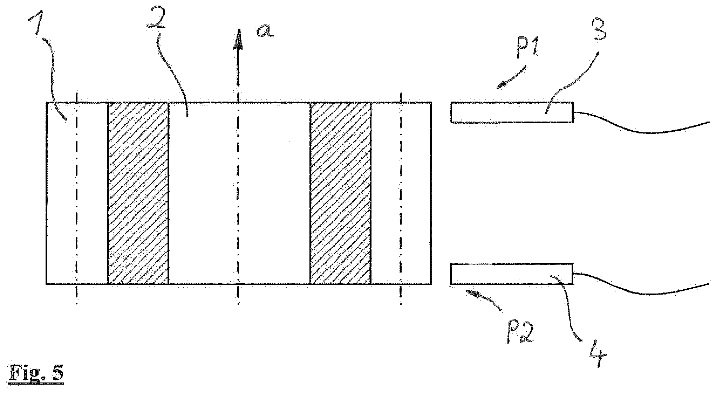

Hier setzt die Erfindung an:
Zunächst erfolgt die Vermessung der Lage der Oberfläche der Zahnflanken des noch nicht geschliffenen Zahnrads. Während im Stand der Technik, hier allerdings für das Einmitten, ein Meßsignal in nur einer Ebene aufgenommen wird und somit keine Informationen über die Verzahnungsbreite vorliegen, wird erfindungsgemäß an mindestens zwei axial versetzten Positionen P1 und P2 eine Messung vorgenommen, wie es Figur 5 zeigt. Die beiden Sensoren 3 und 4 befinden sich hier etwa in den beiden axialen Endbereichen der Verzahnung 1 und vermessen hier das effektiv vorliegende Aufmaß auf den Zahnflanken.

Die Signale der Sensoren 3 und 4 werden von der (nicht dargestellten) Maschinensteuerung aufgenommen, die bei Rotation des Werkstücks 2 unter Berücksichtigung der zugehörigen Signale der Sensoren 3 und 4 ermitteln kann, wie hoch das tatsächlich vorhandene Aufmaß an den beiden Messstellen P1 und P2 ist. Natürlich können auch mehr Messstellen vorgesehen werden, um bezüglich des tatsächlich vorhandenen Aufmaßes genauere Informationen zu gewinnen.

Somit liegen nunmehr Informationen über die Verteilung des Aufmaßes über die Verzahnungsbreite vor (was durch Einsatz einer entsprechenden Anzahl von Sensoren hinreichend genau erfolgen kann).

Nun erfolgt das Schleifen der Verzahnung durch radiale Zustellung des (nicht dargestellten) Schleifwerkzeugs relativ zur Verzahnung 1.

Wurde eine Situation ermittelt, die derjenigen nach Figur 2 entspricht, ist ein Schleifen des Teils unsinnig, da nicht alle Zahnflanken sauber geschliffen werden können. Hier kann das Zahnrad sofort als Ausschuss entfernt werden.

Liegt eine Situation vor, wie sie in Figur 3 skizziert wurde, ist ein Schleifen in klassischem Sinne möglich und sinnvoll: Die radiale Zustellung des Schleifwerkzeugs relativ zur Verzahnung 1 entspricht dem Soll-Wert (TBM) der Zahnweite bzw. des Kugelmaßes; an allen Zahnflanken liegt ein solches Aufmaß vor, dass es zum Spanabtrag an allen Zahnflanken kommt.

Liegt jedoch aufgrund der durchgeführten Messung mittels der Sensoren 3, 4 eine Situation vor, wie sie in Figur 4 dargestellt ist, wird in Abänderung des klassischen Verfahrens wie folgt vorgegangen: Die radiale Zustellung des Schleifwerkzeugs relativ zur Verzahnung 1 erfolgt auf einen höheren Wert, als es dem Soll-Wert TBM der Zahnweite bzw. des Kugelmaßes entspricht. Der höhere Wert entspricht dabei allerdings noch dem Toleranzband und unterschreitet namentlich die untere Toleranzbandgrenze UTBG für die Zahnweite bzw. das Kugelmaß nicht.

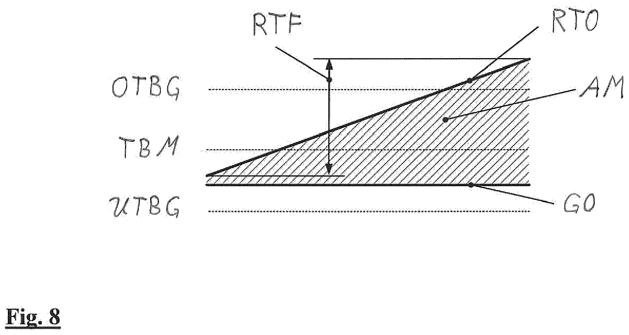

Diese Situation ist in Figur 8 dargestellt. Die radiale Zustellung zwischen Werkstück und Werkzeug liegt nun tiefer als es in Figur 3 oder in Figur 4 der Fall ist, allerdings noch im Bereich des Toleranzbandes, so dass die geschliffene Oberfläche GO so tief liegt, dass der gegebene Rohteilfehler RTF nicht dazu führt, dass Zahnflanken nicht "sauber" geschliffen werden. D. h. nur bei der genannten erhöhter radialer Zustellung liegt an allen Zahnflanken ein hinreichendes Aufmaß vor, so dass es zum Spanabtrag an allen Zahnflanken kommt und ein Gut-Teil erhalten wird.

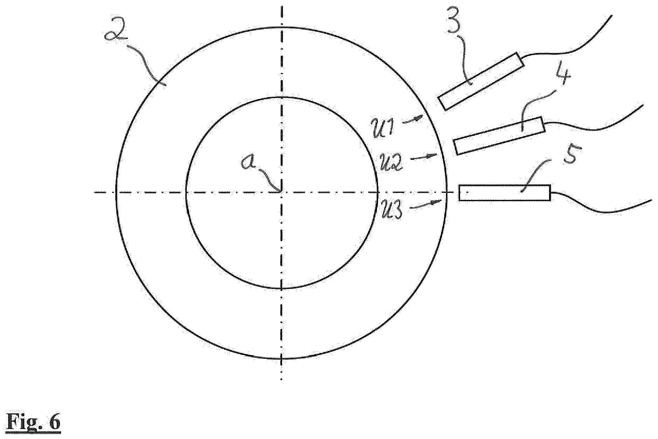

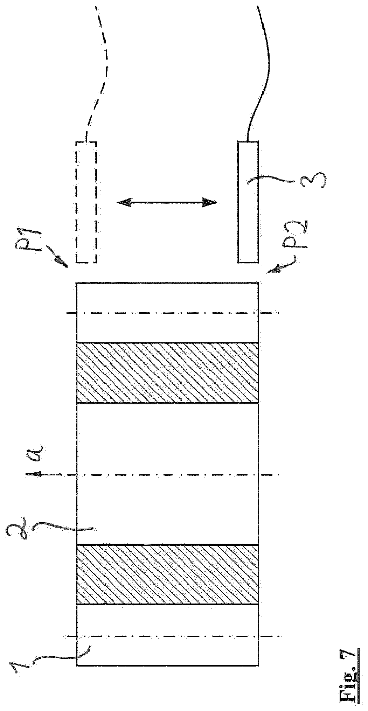

Für das Vermessen der Lage der Oberfläche der Zahnflanken, d. h. des tatsächlichen Aufmaßes, des noch nicht geschliffenen Zahnrads sind in den Figuren 6 und 7 zwei Alternativen zur Lösung gemäß Figur 5 dargestellt:
In Figur 6 ist zu sehen, das mit mehreren Sensoren, hier mit den drei Sensoren 3, 4 und 5, in Richtung der Drehachse a versetzt und gleichzeitig auch in Umfangsrichtung versetzt die Messung durchgeführt wird. Die drei Sensoren 3, 4, 5 sind nämlich an unterschiedlichen Umfangspositionen U1, U2 und U3 angeordnet. Hierdurch kann insbesondere bei engem Bauraum erreicht werden, dass dennoch alle benötigten Sensoren platzsparend untergebracht werden können. Dies gilt insbesondere im Falle einer geringen Zahnbreite.

In Figur 7 ist eine Variante zu sehen, bei der in mehreren Ebenen mit nur einem einzigen Sensor 3 eine Messung erfolgen kann. Hierzu wird der Sensor 3 in Richtung des Doppelpfeils axial bewegt und gleichzeitig die gemessenen Signale aufgenommen. Somit wird hier dann ein spiralförmiges Signal aufgenommen, welches von der Maschinensteuerung in das effektive Aufmaß an den Zahnflanken umgerechnet werden kann. Natürlich ist es auch möglich, die Messung bei ortsfestem Sensor durchzuführen und diesen dann sukzessive zur Vermessung in mehreren Ebenen jeweils axial zu verschieben.

Die Sensoren 3, 4, 5 können entweder separat oder in einem Gehäuse untergebracht werden.

Für alle Messungen gilt, dass die Maschinensteuerung aus der (aktuellen) Position des Sensors bzw. der Sensoren und der Drehlage der Verzahnung 1 ermitteln kann, wo die Oberfläche der vermessenen Zahnflanke liegt, so dass die benötigte Information über die Rohteiloberfläche und das effektiv vorhandene Aufmaß gewonnen werden kann. Wesentlich ist, dass mit der erläuterten Messung Informationen über das Aufmaß über die Verzahnungsbreite gewonnen werden können.

Das heißt, ist die relative Positionierung der Sensoren zueinander bekannt, ist es möglich, die Aufmaßverteilung der Verzahnung durch entsprechende Umrechnung der Signale der Sensoren unter Berücksichtigung der Geometrie des Zahnrad (insbesondere des Schrägungswinkels bei Schrägverzahnung) zu ermitteln.

Somit erlaubt es das vorgeschlagene Verfahren, dass die zu schleifenden Verzahnungen über die Zahnradbreite, d. h. in Richtung der Flankenlinie, vor der Bearbeitung vermessen werden und im gegebenen Falle hiernach eine gezielte Achsabstandsänderung zwischen Werkstück und Werkzeug erfolgt, so dass ein Zahnrad, welches bei klassischer Fertigungsweise Ausschuss würde, noch als Gut-Teil geschliffen werden kann.

Der Vorteil des vorgeschlagenen Verfahrens ist somit, dass der Anteil an Gut-Teilen erhöht werden kann, wobei gleichzeitig eine effiziente Fertigung möglich ist.

Zwar wäre es generell auch möglich, ein Zahnrad mit den Verhältnissen gemäß den Figuren 4 bzw. 8 nachdem erstmaligen klassischen Schleifen (auf Toleranzbandmitte TBM) zu inspizieren und nachzuschleifen, da generell noch genügend Aufmaß vorhanden ist, um ein Gut-Teil zu fertigen. Dies scheitert in der Praxis allerdings daran, dass das dann bereits vorgeschliffene Teil mit dem nur noch geringen Aufmaß nicht mehr hinreichend genau eingemittet werden kann (das Restaufmaß ist womöglich bereits kleiner als der Ausrichtfehler, beim Nachschleifen solcher Teile ist es wahrscheinlich, dass nur eine einseitige Bearbeitung der Zahnflanken erfolgt). Dieses Problem kann durch die erfindungsgemäße Vorgehensweise eliminiert werden.

### Bezugszeichenliste:

- 1: Verzahnung
- 2: Zahnrad
- 3: Sensor
- 4: Sensor
- 5: Sensor

- a: Drehachse des Zahnrads

- P1: erste axiale Position
- P2: erste axiale Position
- U1: erste Umfangsposition
- U2: zweite Umfangsposition
- U3: dritte Umfangsposition

- RTO: Rohteiloberfläche
- RTF: Rohteilfehler

- TBM: Toleranzbandmitte für die Zahnweite / für das Kugelmaß
- OTBG: obere Toleranzbandgrenze
- UTBG: untere Toleranzbandgrenze

- AM: abzuschleifendes Material
- NBB: nicht bearbeiteter Bereich
- GO: geschliffene Oberfläche

## Patentansprüche

1. Verfahren zum Schleifen der Verzahnung (1) eines Zahnrads (2), wobei das Zahnrad (2) eine Drehachse (a) aufweist, wobei das Schleifen erfolgt, indem ein Schleifwerkzeug mit der Verzahnung (1) in Eingriff gebracht und ein Aufmaß auf den Zahnflanken der Verzahnung (1) abgeschliffen wird, wobei für die Verzahnung (1) ein Soll-Wert (TBM) für die Zahnweite und/oder für das Kugelmaß vorgegebenen ist, wobei für den Soll-Wert ein Toleranzband (OTBG, UTBG) vorgegeben ist, dessen Einhaltung noch zu Gut-Teilen führt, wobei das Verfahren die Schritte aufweist:
a) Vermessen der Lage der Oberfläche der Zahnflanken des noch nicht geschliffenen Zahnrads (2) an mindestens zwei in Richtung der Drehachse (a) versetzt angeordneten axialen Positionen (P1, P2) des Zahnrads (2);
b) Ermittlung des tatsächlich vorhandenen Aufmaßes des noch nicht geschliffenen Zahnrads (2) auf der Basis der in Schritt a) ermittelten Messwerte; und
c) Schleifen der Verzahnung (1) durch radiale Zustellung des Schleifwerkzeugs relativ zur Verzahnung (1),
**dadurch gekennzeichnet, dass**:
c1) die radiale Zustellung des Schleifwerkzeugs relativ zur Verzahnung (1) dem Soll-Wert (TBM) der Zahnweite und/oder des Kugelmaßes entspricht, wenn die Ermittlung nach Schritt b) ergeben hat, dass an allen Zahnflanken ein solches Aufmaß vorliegt, dass es zum Spanabtrag an allen Zahnflanken kommt, oder
c2) die radiale Zustellung des Schleifwerkzeugs relativ zur Verzahnung (1) auf einen höheren Wert erfolgt, als es dem Soll-Wert (TBM) der Zahnweite und/oder des Kugelmaßes entspricht, wobei der höhere Wert noch dem Toleranzband (UTBG) für die Zahnweite und/oder das Kugelmaß entspricht, wenn die Ermittlung nach Schritt b) ergeben hat, dass nur bei erhöhter radialer Zustellung an allen Zahnflanken ein solches Aufmaß vorliegt, dass es zum Spanabtrag an allen Zahnflanken kommt.

2. Verfahren nach Anspruch 1, **dadurch gekennzeichnet, dass** ein Schleifen gemäß Schritt c) von Anspruch 1 nicht durchgeführt wird, wenn die Ermittlung nach Schritt b) von Anspruch 1 ergeben hat, dass auch bei einer erhöhten radialen Zustellung bis an Grenze des Toleranzbandes (UTBG) nur noch ein solches Aufmaß vorliegt, dass es beim Schleifen an mindestens einer Zahnflanke zu keinem Spanabtrag kommen würde.

3. Verfahren nach Anspruch 1 oder 2, **dadurch gekennzeichnet, dass** die Vermessung der Lage der Oberfläche der Zahnflanken gemäß Schritt a) von Anspruch 1 mit mindestens zwei Sensoren (3, 4, 5) erfolgt, die in Richtung der Drehachse (a) versetzt, aber an derselben Umfangsposition des Zahnrades (2) angeordnet sind.

4. Verfahren nach Anspruch 1 oder 2, **dadurch gekennzeichnet, dass** die Vermessung der Lage der Oberfläche der Zahnflanken gemäß Schritt a) von Anspruch 1 mit mindestens zwei Sensoren (3, 4, 5) erfolgt, die in Richtung der Drehachse (a) versetzt und an unterschiedlichen Umfangspositionen (U1, U2, U3) des Zahnrades (2) angeordnet sind.

5. Verfahren nach Anspruch 1 oder 2, **dadurch gekennzeichnet, dass** die Vermessung der Lage der Oberfläche der Zahnflanken gemäß Schritt a) von Anspruch 1 mit einem einzigen Sensor (3) erfolgt, der in Richtung der Drehachse (a) beweglich angeordnet ist.

6. Verfahren nach einem der Ansprüche 3 bis 5, **dadurch gekennzeichnet, dass** als Sensor (3, 4, 5) ein optisch wirkender Sensor verwendet wird.

7. Verfahren nach einem der Ansprüche 3 bis 5, **dadurch gekennzeichnet, dass** als Sensor (3, 4, 5) ein induktiv oder kapazitiv wirkender Sensor verwendet wird.

8. Verfahren nach einem der Ansprüche 1 bis 7, **dadurch gekennzeichnet, dass** als Schleifwerkzeug eine Schleifschnecke verwendet wird.

9. Verfahren nach einem der Ansprüche 1 bis 7, **dadurch gekennzeichnet, dass** als Schleifwerkzeug eine Schleifscheibe verwendet wird.

10. Verfahren nach einem der Ansprüche 1 bis 9, **dadurch gekennzeichnet, dass** das Zahnrad (2) ein solches mit einer Außenverzahnung ist.

## Claims

1. Method for grinding the toothing (1) of a gear (2), wherein the gear (2) has an axis of rotation (a), wherein the grinding being carried out by bringing a grinding tool into engagement with the toothing (1) and grinding off an allowance on the tooth flanks of the toothing (1), wherein a nominal value (TBM) for the width of teeth and/or for the spherical measure is predetermined for the toothing (1), wherein a tolerance band (OTBG, UTBG) is predetermined for the nominal value, the observance of which still leads to good parts,
wherein the method comprises the steps of:
a) Measuring the position of the surface of the tooth flanks of the not yet ground gear (2) at at least two axial positions (P1, P2) of the gear (2) offset in the direction of the axis of rotation (a);
b) Determining the actual present allowance of the gear (2) which is not yet ground on the basis of the measured values determined in step a); and
c) Grinding of the toothing (1) by radial infeed of the grinding tool relative to the toothing (1),
**characterized in that**
c1) the radial infeed of the grinding tool relative to the toothing (1) corresponds to the nominal value (TBM) of the width of teeth and/or of the spherical measure, if the determination according to step b) has shown that such an allowance is present on all tooth flanks that material removal occurs on all tooth flanks, or
c2) the radial infeed of the grinding tool relative to the toothing (1) is effected to a higher value than corresponds to the nominal value (TBM) of the width of teeth and/or of the spherical measure, wherein the higher value still corresponding to the tolerance band (UTBG) for the width of teeth and/or for the spherical measure, if the determination according to step b) has shown that only with increased radial infeed on all tooth flanks is there such an allowance that material removal occurs on all tooth flanks.

2. Method according to claim 1, **characterized in that** a grinding according to step c) of claim 1 is not carried out if the determination according to step b) of claim 1 has shown that even with an increased radial infeed up to the limit of the tolerance band (UTBG) only such an allowance is present that no material removal would occur during grinding on at least one tooth flank.

3. Method according to claim 1 or 2, **characterized in that** the measurement of the position of the surface of the tooth flanks according to step a) of claim 1 is carried out with at least two sensors (3, 4, 5) which are offset in the direction of the axis of rotation (a) but are arranged at the same circumferential position of the gear (2).

4. Method according to claim 1 or 2, **characterized in that** the measurement of the position of the surface of the tooth flanks according to step a) of claim 1 is carried out with at least two sensors (3, 4, 5) which are offset in the direction of the axis of rotation (a) and arranged at different circumferential positions (U1, U2, U3) of the gear (2).

5. Method according to claim 1 or 2, **characterized in that** the measurement of the position of the surface of the tooth flanks according to step a) of claim 1 is carried out with a single sensor (3) which is arranged movably in the direction of the axis of rotation (a).

6. Method according to one of claims 3 to 5, **characterized in that** an optically acting sensor is used as sensor (3, 4, 5).

7. Method according to one of claims 3 to 5, **characterized in that** an inductively or capacitively acting sensor is used as the sensor (3, 4, 5).

8. Method according to one of claims 1 to 7, **characterized in that** a grinding worm is used as grinding tool.

9. Method according to one of claims 1 to 7, **characterized in that** a grinding wheel is used as grinding tool.

10. Method according to one of claims 1 to 9, **characterized in that** the gear (2) is one with external toothing.

## Revendications

1. Procédé permettant de rectifier la denture (1) d'une roue dentée (2), dans lequel la roue dentée (2) présente un axe de rotation (a), la rectification étant effectuée en ce qu'un outil de rectification est mis en prise avec la denture (1) et une surépaisseur sur les flancs de dent de la denture (1) est rectifiée, dans lequel une valeur de consigne (TBM) pour l'écartement sur dents et/ou pour la cote sur bille est prédéfinie pour la denture (1), dans lequel, pour la valeur de consigne, une bande de tolérance (OTBG, UTBG) est prédéfinie dont le respect produit encore des pièces acceptées, le procédé présentant les étapes consistant à :
a) mesurer la position de la surface des flancs de dent de la roue dentée (2) non encore rectifiée dans au moins deux positions axiales (P1, P2) de la roue dentée (2) disposées de manière décalée dans la direction de l'axe de rotation (a) ;
b) déterminer la surépaisseur réellement présente de la roue dentée (2) non encore rectifiée sur la base des valeurs de mesure déterminées à l'étape a) ; et
c) rectifier la denture (1) par une approche radiale de l'outil de rectification par rapport à la denture (1),
**caractérisé en ce que** :
c1) l'approche radiale de l'outil de rectification par rapport à la denture (1) correspond à la valeur de consigne (TBM) de l'écartement sur dents et/ou de la cote sur bille si la détermination selon l'étape b) a indiqué que sur tous les flancs de dent il existe une surépaisseur telle qu'un enlèvement de copeaux aura lieu au niveau de tous les flancs de dent, ou
c2) l'approche radiale de l'outil de rectification par rapport à la denture (1) est effectuée à une valeur supérieure à celle qui correspond à la valeur de consigne (TBM) de l'écartement sur dents et/ou de la cote sur bille, la valeur supérieure correspondant toujours à la bande de tolérance (UTBG) pour l'écartement sur dents et/ou la cote sur bille si la détermination selon l'étape b) a indiqué qu'uniquement pour une approche radiale augmentée il existe une telle surépaisseur sur tous les flancs de dent qu'un enlèvement de copeaux aura lieu au niveau de tous les flancs de dent.

2. Procédé selon la revendication 1, **caractérisé en ce qu'**une rectification selon l'étape c) de la revendication 1 n'est pas effectuée si la détermination selon l'étape b) de la revendication 1 a indiqué que même pour une approche radiale augmentée jusqu'à la limite de la bande de tolérance (UTBG) il n'existe plus qu'une surépaisseur telle que lors de la rectification aucun enlèvement de copeaux n'aurait lieu au niveau d'au moins un flanc de dent.

3. Procédé selon la revendication 1 ou 2, **caractérisé en ce que** le mesurage de la position de la surface des flancs de dent selon l'étape a) de la revendication 1 est effectué par au moins deux capteurs (3, 4, 5) qui sont disposés de manière décalée dans la direction de l'axe de rotation (a) mais dans les mêmes positions circonférentielles de la roue dentée (2).

4. Procédé selon la revendication 1 ou 2, **caractérisé en ce que** le mesurage de la position de la surface des flancs de dent selon l'étape a) de la revendication 1 est effectué par au moins deux capteurs (3, 4, 5) qui sont disposés de manière décalée dans la direction de l'axe de rotation (a) et dans différentes positions circonférentielles (U1, U2, U3) de la roue dentée (2).

5. Procédé selon la revendication 1 ou 2, **caractérisé en ce que** le mesurage de la position de la surface des flancs de dent selon l'étape a) de la revendication a) est effectué par un seul capteur (3) qui est disposé de manière mobile dans la direction de l'axe de rotation (a) .

6. Procédé selon l'une quelconque des revendications 3 à 5, **caractérisé en ce qu'**un capteur à effet optique est utilisé comme capteur (3, 4, 5).

7. Procédé selon l'une quelconque des revendications 3 à 5, **caractérisé en ce qu'**un capteur à effet inductif ou capacitif est utilisé comme capteur (3, 4, 5).

8. Procédé selon l'une quelconque des revendications 1 à 7, **caractérisé en ce qu'**une vis de rectification est utilisée comme outil de rectification.

9. Procédé selon l'une quelconque des revendications 1 à 7, **caractérisé en ce qu'**un disque de rectification est utilisé comme outil de rectification.

10. Procédé selon l'une quelconque des revendications 1 à 9, **caractérisé en ce que** la roue dentée (2) est une roue à denture extérieure.
